# EUROPÄISCHE PATENTSCHRIFT

(11) **EP 3 772 882 B1**
(45) Veröffentlichungstag und Bekanntmachung des Hinweises auf die Patenterteilung: **02.03.2022**
(21) Anmeldenummer: 19713776.3
(22) Anmeldetag: 26.03.2019
(51) Int. Cl.: A01C 7/08

(54) **PNEUMATISCHE VERTEILMASCHINE**
PNEUMATIC SPREADING MACHINE
DISTRIBUTEUR PNEUMATIQUE

(30) Priorität: 28.03.2018 DE 102018107422
(43) Veröffentlichungstag der Anmeldung: 17.02.2021
(73) Patentinhaber: Amazonen-Werke H. Dreyer SE & Co. KG, 49205 Hasbergen (DE)
(72) Erfinder: HUEBNER, Benedikt, 32584 Löhne (DE)
(86) Internationale Anmeldenummer: PCT/EP2019/057487
(87) Internationale Veröffentlichungsnummer: WO 2019/185570

(56) Entgegenhaltungen:
- DE-A1-102009 026 333
- DE-A1-102015 116 378
- DE-U1-202005 005 276
- US-A1- 2012 230 779
- US-A1- 2018 077 856

## Beschreibung

Die Erfindung betrifft eine pneumatische Verteilmaschine gemäß dem Oberbegriff des Patentanspruches 1.

Eine derartige Verteilmaschine ist in US 2018/077856 A1 offenbart.

Eine weitere derartige pneumatische Verteilmaschine ist in DE 20 2005 005 276 U1 beschrieben. Diese pneumatisch arbeitende Verteilmaschine dient zum Ausbringen von körnigem Gut, wie Saatgut oder Dünger. Je nach Aufbau der Verteilmaschine können auch Saatgut und Dünger zeitgleich ausgebracht werden.

Zur Bevorratung des zu verteilenden Gutes weist die Verteilmaschine zumindest einen Vorratsbehälter auf. An das untere Ende des Vorratsbehälters schließt sich ein Dosierorgan an, welches das zu verteilende Gut aus dem Vorratsbehälter entnimmt und in eine Förderleitung abgibt. Die Förderleitung ist durch ein Gebläse pneumatisch beaufschlagt und verbindet das Dosierorgan mit einem Verteilerkopf.

Weiter ist die Förderleitung an beliebiger Stelle zwischen dem Dosierorgan und dem Verteilerkopf mit zumindest einer siebartigen Luftauslassöffnung versehen, um eine erhöhte und stabile Förderleistung zu erreichen. Durch die Luftauslassöffnung(en) wird erreicht, dass der Rückstaudruck in der Förderleitung möglichst minimiert wird, indem überschüssige Förderluft entweichen kann. Das Entweichen von zu verteilendem Gut wird hierbei durch eine geeignete Gestaltung der siebartigen Luftauslassöffnung verhindert.

Durch den Kontakt mit dem zu verteilenden Gut wird die Förderluft mit Getreide-, Dünger-, und/oder Beizstaub versetzt. Nachteilig bei der vorstehend beschriebenen Verteilmaschine ist, dass die überschüssige Förderluft frei ausgeblasen wird und durch die enthaltenen Stäube Schaden an der Umwelt und beim Benutzer anrichten kann.

Die Aufgabe der vorliegenden Erfindung besteht darin, eine pneumatische Verteilmaschine mit stabiler Förderleistung zu schaffen, die die Belastung von Umwelt und Benutzer durch in der Förderluft transportierte Stäube verringert.

Diese Aufgabe wird erfindungsgemäß dadurch gelöst, dass der Förderleitung im Bereich der zumindest einen siebartigen Luftauslassöffnung eine die Förderleitung luftdicht umschließender Luftleiter zugeordnet ist, dass der Luftleiter dazu eingerichtet ist, aus der zumindest einen siebartigen Luftauslassöffnung austretende Luft abzuleiten und/oder zu kanalisieren. Infolge dieser Maßnahme wird erreicht, dass die mit schädlichen Stäuben versetzte Förderluft nicht mehr frei in die Umwelt austritt. Vielmehr wird die Förderleitung im Bereich der Luftauslassöffnung derart umschlossen, dass die Förderluft durch den Luftleiter gebündelt und an unbedenkliche Stelle abgeleitet werden kann. Die Belastung für Umwelt und Benutzer ist so in effektiver Weise reduziert.

Weiter ist der Luftleiter dazu eingerichtet, die Förderluft zu kanalisieren, das heißt gezielt in eine Richtung zu lenken. Angenommen, eine Luftabscheidung über eine siebartige Luftauslassöffnung wird nicht benötigt, so ist der Luftleiter dazu eingerichtet, ungewolltes Austreten der Förderluft in die Umwelt zu verhindern. Hierzu ist es beispielsweise denkbar, die Ableitung kurzzuschließen und/oder zu unterbinden. Sowohl Umwelt, als auch Benutzer sind so weiter verbessert vor dem schädlichen Einfluss vorgenannter Stäube geschützt.

Der Luftleiter ist hierbei so auszugestalten, dass die aus der zumindest einen siebartigen Luftauslassöffnung austretende Luft luftdicht aufgefangen und über beispielsweise Schläuche oder Rohre abgeleitet werden kann. Zum Kanalisieren der Luft ist es denkbar, die Schläuche oder Rohre mit sich selbst zu verbinden, somit kurzzuschließen oder ihre Zufuhr bzw. sie selbst zu verschließen.

Erfindungsgemäß ist der Luftleiter als lösbar fixierbare Manschette ausgeführt, wobei die Manschette Öffnungen aufweist, und die Manschette mittels sich an die Öffnungen anschließenden Anschlussstutzen dazu eingerichtet ist, aus der zumindest einen siebartigen Luftauslassöffnung austretende Luft abzuleiten. Vorteilhaft bei dieser Ausführungsform ist, dass die Anschlussstutzen sich in besonders zweckmäßiger Weise mit Mitteln zur Ableitung der Förderluft verbinden lassen. Die Ableitung der Förderluft an unbedenkliche Stelle und somit der Schutz von Umwelt und Benutzer ist so weiter verbessert.

In einer weiteren vorteilhaften Weiterbildung der Erfindung ist vorgesehen, dass die Verteilmaschine zumindest ein Bodenbearbeitungswerkzeug, vorzugsweise Säschar, umfasst, wobei die Manschette mittels eines oder mehrerer Anschlussstutzen über zumindest eine Leitung mit zumindest einem Bodenbearbeitungswerkzeug verbindbar ist. Es ist bekannt, dass die Schadwirkung von mit Stäuben versetzter Förderluft zumindest annährend unwirksam gemacht wird, durch die Einarbeitung der Förderluft in den Boden. Diese Weiterbildung zeichnet sich folglich dadurch aus, dass die Bodenbearbeitungswerkzeuge durch die Einarbeitung der Luft in den Boden eine integrierte Funktion erlangen, so dass bei der Bodenbearbeitung aus der siebartigen Luftauslassöffnung austretende Luft in einfacher Weise unschädlich gemacht wird.

In einer weiteren vorteilhaften Weiterbildung der Erfindung ist der Verteilerkopf über jeweils eine an einer Ausbringöffnung des Verteilerkopfes anschließbare Ausbringleitung mit einem Bodenbearbeitungswerkzeug verbindbar und umfasst Absperrmittel, welche dazu eingerichtet sind einzelne Ausbringöffnungen abzusperren, wobei die Manschette über zumindest eine Ausbringleitung, dessen Ausbringöffnung am Verteilerkopf abgesperrt ist, mit zumindest einem Bodenbearbeitungswerkzeug verbindbar ist. Da die Ausbringleitungen, dessen Ausbringöffnung am Verteilerkopf abgesperrt ist, anderenfalls ungenutzt blieben, ist die erfindungsgemäße Verteilmaschine durch diese Weiterbildung ohne zusätzliche Mittel in zweckmäßiger Weise verbessert. Die vorhandenen Mittel sind so vielseitig einsetzbar und Kosten für zusätzliche Mittel entfallen.

Eine andere vornehmliche Weiterbildung der Erfindung zeichnet sich dadurch aus, dass die Öffnungen aufweisende Manschette durch eine lösbar fixierbare Manschettendichtung austauschbar ist, wobei die Manschettendichtung dazu eingerichtet ist die siebartige Luftauslassöffnung luftdicht zu bedecken. Für den Fall, dass beispielsweise eine Luftabscheidung über eine siebartige Luftauslassöffnung nicht gewünscht ist, ist das Austreten von Förderluft so unterbunden. Dies ist dem Schutz von Umwelt und Benutzer aus vorstehend beschriebenen Gründen zuträglich. Weiter ist auf diese Weise die benötigte Förderleistung des die Förderleitung beaufschlagenden Gebläses reduziert, da die Förderluft in der Förderleitung kanalisiert wird.

In einer weiteren vorteilhaften Weiterbildung der Erfindung ist vorgesehen, dass die Anzahl und/oder der Öffnungsquerschnitt der Öffnungen der Manschette der Menge der austretenden Luft angepasst ausgebildet ist. Der Rückstaudruck in der Förderleitung ist so in einfacher Weise minimiert, da die Ableitung der austretenden Luft durch ausreichend Austrittsquerschnittsfläche erleichtert ist. Dies ist nutzbringend für eine stabile Förderleistung der Verteilmaschine.

Der Betrieb der vorstehend beschriebenen Verteilmaschine zeichnet sich durch zumindest einen der folgenden Verfahrensschritte aus:
a. um Luft abzuleiten:
   i. Anordnen des als Manschette ausgeführten Luftleiters an der Förderleitung im Bereich der siebartigenLuftauslassöffnung,
   ii. Ableiten von aus der siebartigen Luftauslassöffnung austretenden Luft und/oder
b. um Luft zu kanalisieren:
   i. Kurzschließen und/oder Unterbinden der Ableitung der Luft durch Fixieren einer Manschettendichtung an der Förderleitung im Bereich der siebartigen Öffnung.

Die Umwelt und der Benutzer der Verteilmaschine werden so in einfacher Weise vor dem schädlichen Einfluss austretender Luft bewahrt.

In einer vorteilhaften Weiterbildung ist vorgesehen, dass der Betrieb der Verteilmaschine sich weiter durch zumindest einen der folgenden Verfahrensschritte auszeichnet:
a. um Luft abzuleiten:
   i. Fixieren einer Manschette mit zumindest einem Luft ableitenden Anschlussstutzen an der Förderleitung im Bereich der siebartigen Luftauslassöffnung,
   ii. Absperren zumindest einer Ausbringöffnung an einem Verteilerkopf der Verteilmaschine,
   iii. Verbinden des zumindest einem Anschlussstutzen mittels einer Leitung und/oder einer Ausbringleitung, dessen zugeordnete Ausbringöffnung am Verteilerkopf abgesperrt ist, mit einem Bodenbearbeitungswerkzeug,
   iv. Einarbeiten der aus der siebartigen Luftauslassöffnung austretenden Luft in den Boden am Bodenbearbeitungswerkzeug.

In der vorstehend beschriebenen Weiterbildung ist der Luftleiter aus Manschette und/oder Manschettendichtung ausgeführt. Der vorstehend beschriebene Betrieb ist so in einfacher Weise verbessert und der Schutz für Umwelt und Nutzer gesteigert.

Weitere Einzelheiten der Erfindung sind der Beispielsbeschreibung und den Zeichnungen zu entnehmen. Die Zeichnungen zeigen
- Fig.1: eine pneumatische Verteilmaschine, wobei verschiedene Komponenten teilweise demontiert sind, in perspektivischer Ansicht,
- Fig.2: ein Verteilerkopf der Verteilmaschine mit einem als Manschette ausgeführten Luftleiter in teilweise geschnittener Detailansicht von vorne,
- Fig.3: ein Verteilerkopf mit einem als Manschettendichtung ausgeführten Luftleiter in teilweise geschnittener Ansicht von vorne,
- Fig.4: die Manschette gemäß Fig.2 in perspektivischer Ansicht, und
- Fig.5: die Manschettendichtung gemäß Fig.3 in perspektivischer Ansicht.

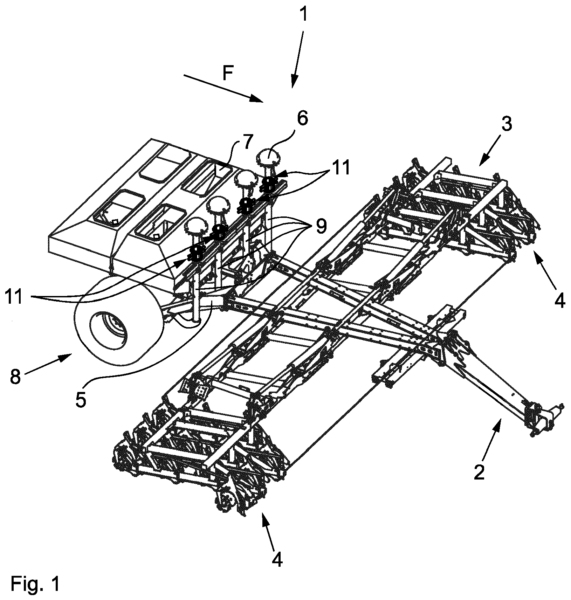

Eine erfindungsgemäße pneumatische Verteilmaschine 1 für Saatgut und/oder Dünger ist in Fig.1 dargestellt. Die Verteilmaschine 1 umfasst an seinem in Fahrtrichtung F vorderen Ende eine Zugdeichsel 2. Die Zugdeichsel 2 dient dazu, die Verteilmaschine 1 hinter einer nicht dargestellten Zugmaschine anzuhängen, so dass diese sich gemeinsam über eine zu bearbeitende Fläche bewegen können. An die Zugdeichsel 2 schließt sich ein beidseitig klappbarer Zentralrahmen 3 an. Der Zentralrahmen 3 ist zwischen zwei Stellungen, Arbeitsstellung und Transportstellung, verbringbar. In Fig.1 befindet sich die Verteilmaschine 1 in Arbeitsstellung, das heißt die beiden Seiten des Zentralrahmens 3 sind ausgeklappt. Um die Verteilmaschine 1 in Transportstellung zu verbringen, lassen sich die beiden Seiten des Zentralrahmens 3 in eine zumindest annährend aufrechte Stellung klappen. Weiter ist an dem Zentralrahmen 3 eine Mehrzahl von Bodenbearbeitungswerkzeugen 4 angeordnet. Die Bodenbearbeitungswerkzeuge 4 sind in Fahrtrichtung F in mehreren Reihen hintereinander und quer zur Fahrtrichtung F nebeneinander am Zentralrahmen 3 befestigt und lassen sich unterscheiden in meißelartig ausgebildete Säschare und nachlaufende Bügelrollen. Die Säschare formen hierbei eine Furche in die Saatgut und/oder Dünger abgelegt wird und die Bügelrollen bedecken diese anschließend wieder mit Boden. Der Übersicht halber sind die Bodenbearbeitungswerkzeuge 4 im mittleren Bereich des Zentralrahmens 3 demontiert und somit in Fig.1 nicht zu sehen.

An den Zentralrahmen 3 wiederum schließt sich ein Tragrahmen 5 an. Der Tragrahmen 5 trägt in der in Fig.1 gezeigten Ausführungsform insgesamt vier Verteilerköpfe 6 sowei vier separate Vorratsbehälter 7 und umfasst ein einachsiges Fahrwerk 8. Die Vorratsbehälter 7 dienen der Bevorratung von Saatgut bzw. Dünger und stehen jeweils in Verbindung mit einem unter dem Vorratsbehälter 7 angeordneten Dosierorgan und einem der Verteilerköpfe 6. Ist die Verteilmaschine 1 hinter der Zugmaschine angehangen, so rollt die Verteilmaschine 1 über das Fahrwerk 8 auf dem Boden ab.

Um Saatgut bzw. Dünger von einem der Vorratsbehälter 7 zu dem jeweiligen Verteilerkopf 6 zu fördern, wird das zu verteilende Gut von dem Dosierorgan in eine Förderleitung 9 abgegeben. Die Förderleitungen 9 sind durch zumindest ein von den Vorratsbehältern 7 verdecktes Gebläse pneumatisch beaufschlagt und verbinden jeweils ein Dosierorgan mit einem Verteilerkopf 6. Von den Verteilerköpfen 6 gelangt das zu verteilende Gut dann schließlich über in Fig.1 nicht dargestellte Ausbringleitungen 10 zu den Bodenbearbeitungswerkzeugen 4 von wo aus es auf der zu bearbeitenden Fläche verteilt wird. Um Stauungen und Verstopfungen zu vermeiden, sowie eine stabile Förderleistung zu gewährleisten, sind die Förderleitungen 9 jeweils mit einer siebartigen Luftauslassöffnung versehen. Über die Luftauslassöffnungen strömt überschüssige Förderluft aus dem System, so dass die vorstehend erwähnte Wirkung erzielt wird. Die Luftauslassöffnungen werden durch jeweils einen in diesem Bereich angeordneten Luftleiter 11 erfasst. Die Luftleiter 11 umschließen die Förderleitung 9 jeweils luftdicht und sind so dazu eingerichtet, die austretende Luft abzuleiten und/oder zu kanalisieren. Die Förderluft vermischt sich im Betrieb mit an dem zu verteilendem Gut anhaftendem Getreide-, Dünger- bzw. Beizmittelstaub. Diese Stäube können wenn sie frei entweichen würden, Schaden an der Umwelt und dem Benutzer anrichten. Um diese Belastung zu verringern bzw. zu vermeiden, ist der erfindungsgemäße Luftleiter 11 einzusetzen. Die Schadwirkung wird verringert bzw. vermieden, indem die austretende Luft von dem Luftleiter 11 an unbedenkliche Stelle abgeleitet und/oder kanalisiert wird.

Zur Ableitung der Luft ist denkbar, dass der Luftleiter 11 über in Fig.1 nicht dargestellte Mittel, vorzugsweise Schläuche oder Rohre, verfügt, um die kontaminierte Luft an die gewünschte Stelle abzuleiten. Eine geeignete Stelle ist beispielsweise ein bodennaher Auslass, vorzugsweise an einem Bodenbearbeitungswerkzeug 4 der Verteilmaschine 1. Zum Kanalisieren der Luft ist eine solche Ableitung kurzuschließen und/oder die Ableitung der Luft so zu unterbinden, dass die Förderluft in der Förderleitung 9 verbleibt.

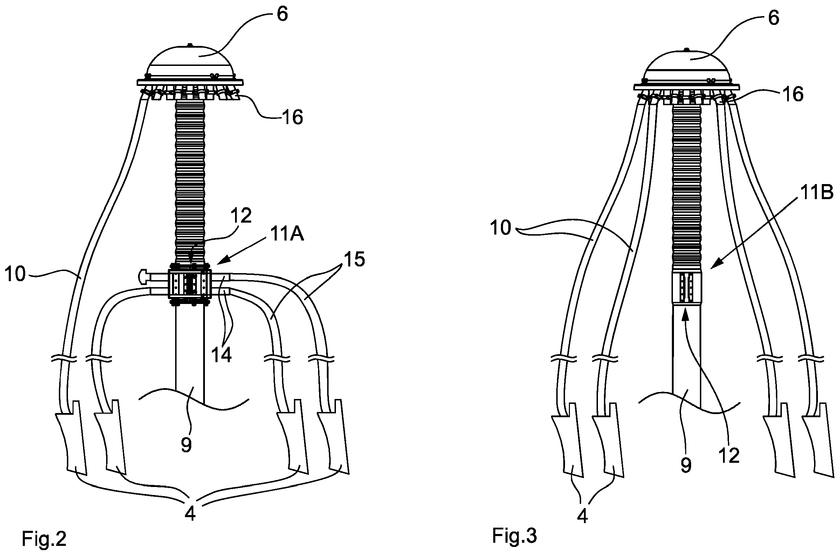

In Fig.2 ist ein Verteilerkopf 6 der Verteilmaschine 1 mit einem als lösbare Manschette 11A ausgeführten Luftleiter 11 in teilweise geschnittener Detailansicht von vorn zu sehen. Die Manschette 11A umschließt die Förderleitung 9 in einem senkrechten Abschnitt und umspannt so eine darunterliegende siebartige Luftauslassöffnung luftdicht. Die Manschette 11A ist aus einem elastischen Material gebildet und weist einen Verschluss 12 zur lösbaren Fixierung auf. Die Manschette 11A weist insgesamt vier sich an im Innern der Manschette 11A befindliche Öffnungen 13 anschließende Anschlussstutzen 14 auf. Die Anschlussstutzen 14 dienen dazu, die aus der siebartigen Luftauslassöffnung austretende Luft abzuleiten.

Um die austretende Luft in möglichst effektiver Weise zumindest annährend unschädlich zu machen, ist vorgesehen, dass die Manschette 11A mittels der Anschlussstutzen 14 über je eine Leitung 15 mit einem als Säschar ausgeführten Bodenbearbeitungswerkzeug 4 verbindbar ist. Vorzugsweise ist die Leitung 15 als elastischer Schlauch ausgebildet. Die Leitung 15 verläuft jeweils zwischen Anschlussstutzen 14 und Bodenbearbeitungswerkzeug 4 und verbindet diese so luftleitend. Die kontaminierte Luft strömt so über das Säschar aus und wird direkt in den Boden eingearbeitet. Das Risiko für Umwelt und Benutzer ist auf diese Weise besonders effektiv verringert.

Weiter umfasst der Verteilerkopf 6 über seinen Umfang verteilte Ausbringöffnungen 16. Aus den Ausbringöffnungen 16 strömt im üblichen Betrieb das zu verteilende Gut aus und wird von jeder Ausbringöffnung durch eine Ausbringleitung 10 zu den Bodenbearbeitungswerkzeugen 4 geleitet. Zur besseren Übersicht sind in Fig.2 der Großteil der Ausbringleitungen 10 nicht gezeigt. Für einen Betrieb, in dem nicht alle Ausbringöffnungen 16 am Verteilerkopf 6 genutzt werden, umfasst der Verteilerkopf 6 in seinem Innern Absperrmittel, welche dazu eingerichtet sind einzelne Ausbringöffnungen 16 abzusperren. Damit die Ausbringleitungen 10, dessen Ausbringöffnung 16 am Verteilerkopf 6 abgesperrt ist, nicht ungenutzt bleiben, ist vorgesehen, dass die Manschette 11A über eine solche Ausbringleitung 10 anstelle der Leitung 15 mit einem Bodenbearbeitungswerkzeug 4 verbindbar ist. In Fig.2 ist hierzu die Ausbringleitung 10 vom Verteilerkopf 6 abzuziehen und an dem freien Anschlussstutzen 14 anzubringen. Andernfalls ist der Anschlussstutzen 14 durch einen geeigneten Stopfen oder Deckel zu verschließen, so dass keine Förderluft frei ausströmt.

In Fig.3 ist ein Verteilerkopf 6 der Verteilmaschine 1 mit einem als Manschettendichtung 11B ausgeführten Luftleiter 11 in teilweise geschnittener Detailansicht von vorn zu sehen. Die Manschettendichtung 11B ist gegen die Manschette 11A austauschbar und weist keinerlei Öffnungen auf. Die Manschettendichtung 11B ist ebenfalls aus einem elastischen Material gebildet und umfasst einen Verschluss 12 zur lösbaren Fixierung. Die Manschettendichtung 11B umschließt die siebartige Luftauslassöffnung in der Förderleitung 9 derart, dass diese luftdicht abgedeckt ist. Die Manschette 11A ist durch die Manschettendichtung 11B auszutauschen, wenn keine Luftabscheidung aus der Förderleitung 9 gewünscht ist. In diesem Fall wird die Förderluft in der Förderleitung 9 kanalisiert. Folglich sind die Ausbringleitungen 10 einerseits mit den Ausbringöffnungen 16 am Verteilerkopf 6 und andererseits mit den Bodenbearbeitungswerkzeugen 4 verbunden. Auch hier sind der Übersicht halber nur vier Ausbringleitungen 10 und Bodenbearbeitungswerkzeuge 4 angedeutet.

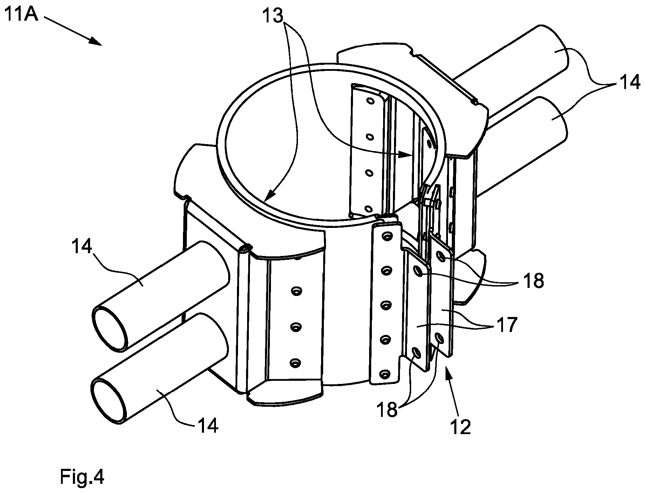

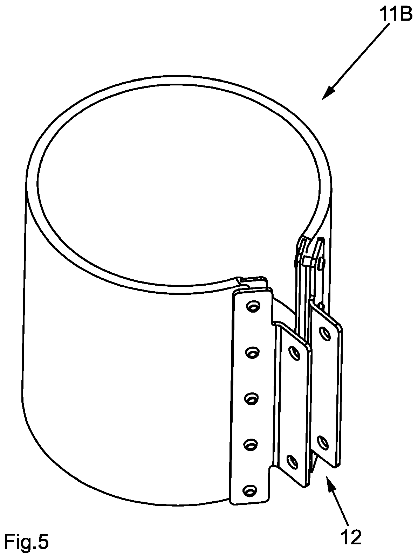

In Fig.4 ist die Manschette 11A gemäß Fig.2 in perspektivischer Ansicht zu sehen. Die Manschette 11A weist zwei Öffnungen 13 auf, an die sich die Anschlussstutzen 14 anschließen. Die Anzahl bzw. der Öffnungsquerschnitt der Öffnungen 13 ist so bemessen, dass die Menge der abzuleitenden Luft nahezu frei die Öffnungen 13 durchströmen kann, um keinen unerwünschten Staudruck zu erzeugen. Die Anschlussstutzen 14 sind in das elastische Material der Manschette 11A eingebunden, beispielsweise eingenietet und so ausgestaltet, dass sie sich an die runde Förderleitung 9 anlegen. Die beiden Öffnungen 13 sind bei der Montage über den siebartigen Luftauslassöffnungen zu platzieren, so dass die austretende Luft möglichst optimal geleitet wird. Der Innendurchmesser der Manschette 11A ist kleiner bemessen als der Außendurchmesser der Förderleitung 9, so dass durch Fixierung mit Hilfe des Verschlusses 12 eine Spannwirkung entsteht und sich die Manschette 11A besonders dicht an die Förderleitung 9 anlegt. Der Verschluss 12 umfasst zwei gleichartig ausgebildete Spannelemente 17, welche ebenfalls in das elastische Material der Manschette 11A eingebunden, beispielsweise eingenietet sind. Die Spannelemente 17 sind an ihrem oberen und unteren Ende mit einer Durchgangsbohrung 18 versehen. Um den Verschluss 12 zu schließen und die Manschette 11A lösbar zu fixieren, werden durch die gegenüberliegenden Durchgangsbohrungen 18 nicht dargestellte Verbindungsmittel, beispielsweise Schrauben gesteckt und auf der Gegenseite mit einer Mutter versehen. Durch Aufschrauben der Muttern werden die Spannelemente 17 aufeinander zu bewegt und der elastische Anteil der Manschette 11A so gespannt, dass diese ortsfest an der Förderleitung 9 verbleibt. In Fig.5 ist die Manschettendichtung 11B gemäß Fig.3 in perspektivischer Ansicht zu sehen. Die Manschettendichtung 11B ist im Wesentlichen durch das elastische Material gebildet und weist ebenfalls den vorstehend erläuterten Verschluss 12 auf. So ist die Manschettendichtung 11B in gleicher Weise an einer Förderleitung 9 lösbar fixierbar. Die Manschettendichtung 11B ist so zu platzieren, dass die siebartigen Luftauslassöffnungen nicht im Bereich des Verschlusses 12 liegen.

Zum Ableiten von Luft ist im Betrieb der vorstehend beschriebenen Verteilmaschine 1 der als Manschette 11A ausgeführte Luftleiter 11 im Bereich der siebartigen Luftauslassöffnung anzuordnen. Weiter kann der Benutzer einzelne Ausbringöffnungen 16 am Verteilerkopf 6 der Verteilmaschine 1 absperren, so dies für den geplanten Verteilvorgang gewünscht ist. Die Anschlussstutzen 14 sind mittels der Leitungen 15 und/oder der Ausbringleitungen 10, dessen Ausbringöffnung 16 am Verteilerkopf 6 abgesperrt sind, mit Bodenbearbeitungswerkzeugen 4 zu verbinden. Die aus den siebartigen Luftauslassöffnungen austretende Luft wird abgeleitet und an den Bodenbearbeitungswerkzeugen 4 in den Boden eingearbeitet. Zum Kanalisieren von Luft kann entweder die Luftableitung der Manschette 11A kurzgeschlossen werden, indem die Anschlussstutzen 14 untereinander verbunden werden. Oder die Anschlussstutzen werden durch einen Stopfen oder Deckel derart verschlossen, dass keine Förderluft austritt. Alternativ kann die Manschette 11A durch die Manschettendichtung 11B getauscht werden. Die Manschettendichtung 11B bedeckt die siebartige Luftauslassöffnung der Förderleitung 9 in der die Luft kanalisiert werden soll dann luftdicht.

### Bezugszeichenliste

- 1: Verteilmaschine
- F: Fahrtrichtung
- 2: Zugdeichsel
- 3: Zentralrahmen
- 4: Bodenbearbeitungswerkzeug
- 5: Tragrahmen
- 6: Verteilerkopf
- 7: Vorratsbehälter
- 8: Fahrwerk
- 9: Förderleitung
- 10: Ausbringleitung
- 11: Luftleiter
- 11A: Manschette
- 11B: Manschettendichtung
- 12: Verschluss
- 13: Öffnung
- 14: Anschlussstutzen
- 15: Leitung
- 16: Ausbringöffnung
- 17: Spannelement
- 18: Durchgangsbohrung

## Patentansprüche

1. Pneumatische Verteilmaschine (1) für Saatgut und/oder Dünger mit zumindest einem Vorratsbehälter (7) für zu verteilendes Gut, einem mit dem Vorratsbehälter (7) in Verbindung stehenden Dosierorgan und einem Verteilerkopf (6), der über zumindest eine pneumatisch beaufschlagte Förderleitung (9) mit dem Dosierorgan verbunden ist, wobei die Förderleitung (9) an beliebiger Stelle zwischen Dosierorgan und Verteilerkopf (6) mit zumindest einer siebartigen Luftauslassöffnung versehen ist, **dadurch gekennzeichnet, dass** der Förderleitung (9) im Bereich der zumindest einen siebartigen Luftauslassöffnung ein die Förderleitung (9) luftdicht umschließender, als lösbar fixierbare Manschette (11A) ausgeführter Luftleiter (11) zugeordnet ist, dass die Manschette (11A) Öffnungen (13) aufweist, dass die Manschette (11A) mittels sich an die Öffnungen (13) anschließenden Anschlussstutzen (14) dazu eingerichtet ist, aus der zumindest einen siebartigen Luftauslassöffnung austretende Luft abzuleiten.

2. Verteilmaschine (1) nach zumindest einem der vorstehenden Ansprüche, **dadurch gekennzeichnet, dass** die Verteilmaschine (1) zumindest ein Bodenbearbeitungswerkzeug (4), vorzugsweise Säschar, umfasst, dass die Manschette (11A) mittels Anschlussstutzen (14) über zumindest eine Leitung (15) mit zumindest einem Bodenbearbeitungswerkzeug (4) verbindbar ist.

3. Verteilmaschine (1) nach Anspruch 2, **dadurch gekennzeichnet, dass** der Verteilerkopf (6) über jeweils eine an einer Ausbringöffnung (16) des Verteilerkopfes (6) anschließbare Ausbringleitung (10) mit einem Bodenbearbeitungswerkzeug (4) verbindbar ist und Absperrmittel umfasst, welche dazu eingerichtet sind einzelne Ausbringöffnungen (16) abzusperren, dass die Manschette (11A) über zumindest eine Ausbringleitung (10), dessen Ausbringöffnung (16) am Verteilerkopf (6) abgesperrt ist, mit zumindest einem Bodenbearbeitungswerkzeug (4) verbindbar ist.

4. Verteilmaschine (1) nach zumindest einem der vorstehenden Ansprüche, **dadurch gekennzeichnet, dass** die Öffnungen (13) aufweisende Manschette (11A) durch eine lösbar fixierbare Manschettendichtung (11B) austauschbar ist, dass die Manschettendichtung (11B) dazu eingerichtet ist die siebartige Luftauslassöffnung luftdicht zu bedecken.

5. Verteilmaschine (1) nach zumindest einem der vorstehenden Ansprüche, **dadurch gekennzeichnet, dass** die Manschette (11A) zumindest zwei Öffnungen (13) aufweist, so dass die Manschette (11A) der Menge der austretenden Luft angepasst ausgebildet ist.

6. Verfahren zum Betrieb der Verteilmaschine (1) nach zumindest einem der vorstehenden Ansprüche, **gekennzeichnet durch** zumindest einen der Verfahrensschritte:
*a.* um Luft abzuleiten:
*i.* Anordnen des als Manschette (11A) ausgeführten Luftleiters (11) an der Förderleitung (9) im Bereich der siebartigen Luftauslassöffnung,
*ii*. Ableiten von aus der siebartigen Luftauslassöffnung austretenden Luft und/oder
*b.* um eine siebartige Luftauslassöffnung luftdicht zu bedecken, also um Luft zu kanalisieren:
i. Kurzschließen und/oder Unterbinden der Ableitung der Luft durch Fixieren einer Manschettendichtung (11B) an der Förderleitung (9) im Bereich der siebartigen Öffnung.

7. Verfahren zum Betrieb der Verteilmaschine (1), wobei der Luftleiter (11) als Manschette (11A) und/oder Manschettendichtung (11B) ausgeführt ist, nach Anspruch 6, **gekennzeichnet durch** zumindest einen der Verfahrensschritte:
*a.* um Luft abzuleiten:
*i.* Fixieren einer Manschette (11A) mit zumindest einem Luft ableitenden Anschlussstutzen (14) an der Förderleitung (9) im Bereich der siebartigen Luftauslassöffnung,
*ii.* Absperren zumindest einer Ausbringöffnung (16) an einem Verteilerkopf (6) der Verteilmaschine (1),
*iii.* Verbinden des zumindest einem Anschlussstutzen (14) mittels einer Leitung (15) und/oder einer Ausbringleitung (10), dessen zugeordnete Ausbringöffnung (16) am Verteilerkopf (6) abgesperrt ist, mit einem Bodenbearbeitungswerkzeug (4),
*iv.* Einarbeiten der aus der siebartigen Luftauslassöffnung austretenden Luft in den Boden am Bodenbearbeitungswerkzeug (4).

## Claims

1. Pneumatic spreading machine (1) for seed and/or fertilizer, having at least one storage container (7) for material to be spread, a dosing element in connection with the storage container (7), and a spreading head (6) which is joined to the dosing element via at least one pneumatically charged delivery line (9), wherein the delivery line (9), at any point between the dosing element and the spreading head (6), is provided with at least one sieve-like air outlet opening, **characterized in that** an air conduit (11) which surrounds the delivery line (9) in an airtight manner and is executed as a releasably fixable collar (11A) is associated with the delivery line (9) in the region of the at least one sieve-like air outlet opening; **in that** the collar (11A) has openings (13); and **in that** the collar (11A) is configured, by means of connecting pieces (14) connecting to the openings (13), to discharge air exiting from the at least one sieve-like air outlet opening.

2. Spreading machine (1) according to at least one of the preceding claims, **characterized in that** the spreading machine (1) comprises at least one soil working tool (4), preferably a sowing coulter; **in that** the collar (11A) can be joined by means of connecting piece (14), via at least one line (15), to at least one soil working tool (4).

3. Spreading machine (1) according to claim 2, **characterized in that** the spreading head (6) can be joined to a soil working tool (4) via a respective discharge line (10) which is connectable to a discharge opening (16) of the spreading head (6) and comprises shut-off means which are configured to block individual discharge openings (16); and **in that** the collar (11A) can be joined to at least one soil working tool (4) via at least one discharge line (10) whose discharge opening (16) is blocked at the spreading head (6).

4. Spreading machine (1) according to at least one of the preceding claims, **characterized in that** the collar (11A) having openings (13) can be replaced by a releasably fixable collar seal (11B); and **in that** the collar seal (11B) is configured to cover the sieve-like air outlet opening in an airtight manner.

5. Spreading machine (1) according to at least one of the preceding claims, **characterized in that** the collar (11A) has at least two openings (13), so that the collar (11A) is designed so as to be adapted to the quantity of the exiting air.

6. Method for operating the spreading machine (1) according to at least one of the preceding claims, **characterized by** at least one of the method steps:
*a.* to discharge air:
*i.* arranging the air conduit (11), executed as a collar (11A), on the delivery line (9) in the region of the sieve-like air outlet opening,
*ii.* discharging air exiting from the sieve-like air outlet opening, and/or
*b.* to cover a sieve-like air outlet opening in an airtight manner, i.e. to channel air:
*i.* short-circuiting and/or preventing the air discharge by fixing a collar seal (11B) to the delivery line (9) in the region of the sieve-like opening.

7. Method for operating the spreading machine (1), wherein the air conduit (11) is designed as a collar (11A) and/or collar seal (11B) according to claim 6, **characterized by** at least one of the following method steps:
*a.* to discharge air:
*i.* fixing a collar (11A) having at least one air-discharging connecting piece (14) to the delivery line (9) in the region of the sieve-like air outlet opening,
*ii.* blocking at least one output opening (16) at a spreading head (6) of the spreading machine (1),
*iii.* joining the at least one connecting piece (14) to a soil-working tool (4) by means of a line (15) and/or a discharge line (10) whose associated discharge opening (16) is blocked at the spreading head (6),
*iv.* incorporating the air exiting the sieve-like air outlet opening into the soil at the soil working tool (4).

## Revendications

1. Distributeur pneumatique (1) pour semences et/ou engrais, présentant au moins un réservoir (7) pour le produit à distribuer, un organe de dosage en communication avec le réservoir (7) et une tête distributrice (6) qui est reliée par l'intermédiaire d'au moins une conduite de transport (9) pneumatique à l'organe de dosage, la conduite de transport (9) étant pourvue d'au moins une ouverture d'évacuation d'air de type tamis à un endroit voulu entre l'organe de dosage et la tête distributrice (6), **caractérisé en ce que** la conduite de transport (9) est associée, dans la zone de l'au moins une ouverture d'évacuation d'air de type tamis, à un guide d'air (11) entourant la conduite de transport (9) de manière étanche à l'air et conçu sous forme de manchette (11A) pouvant être fixée de manière amovible, **en ce que** la manchette (11A) présente des ouvertures (13), **en ce que** la manchette (11A) est conçue pour évacuer l'air sortant de l'au moins une ouverture d'évacuation d'air de type tamis au moyen de tubulures de raccordement (14) se raccordant aux ouvertures (13).

2. Distributeur (1) selon au moins l'une quelconque des revendications précédentes, **caractérisé en ce que** le distributeur (1) comprend au moins un outil de traitement du sol (4), de préférence un soc de semoir, **en ce que** la manchette (11A) peut être reliée à au moins un outil de traitement du sol (4) au moyen de tubulures de raccordement (14) par l'intermédiaire d'au moins une conduite (15).

3. Distributeur (1) selon la revendication 2, **caractérisé en ce que** la tête distributrice (6) peut être reliée à un outil de traitement du sol (4) par l'intermédiaire d'une conduite d'épandage (10) pouvant être raccordée respectivement à une ouverture d'épandage (16) de la tête distributrice (6) et comprend des moyens d'obturation qui sont conçus pour obturer des ouvertures d'épandage (16) individuelles, **en ce que** la manchette (11A) peut être reliée à au moins un outil de traitement du sol (4) par l'intermédiaire d'au moins une conduite d'épandage (10), dont l'ouverture d'épandage (16) est obturée au niveau de la tête distributrice (6).

4. Distributeur (1) selon au moins l'une quelconque des revendications précédentes, **caractérisé en ce que** la manchette (11A) présentant des ouvertures (13) peut être remplacée par un obturateur de manchette (11B) pouvant être fixé de manière amovible, **en ce que** l'obturateur de manchette (11B) est conçu pour recouvrir l'ouverture d'évacuation d'air de type tamis de manière étanche à l'air.

5. Distributeur (1) selon au moins l'une quelconque des revendications précédentes, **caractérisé en ce que** la manchette (11A) présente au moins deux ouvertures (13), de telle sorte que la manchette (11A) soit conçue de manière adaptée à la quantité d'air sortant.

6. Procédé pour le fonctionnement du distributeur (1) selon au moins l'une quelconque des revendications précédentes, **caractérisé par** au moins l'une des étapes de procédé :
a. pour évacuer l'air :
*i.* agencer le guide d'air (11) conçu sous forme de manchette (11A) au niveau de la conduite de transport (9) dans la zone de l'ouverture d'évacuation d'air de type tamis,
*ii.* évacuer l'air sortant de l'ouverture d'évacuation d'air de type tamis et/ou
*b.* pour recouvrir une ouverture d'évacuation d'air de type tamis de manière étanche à l'air, donc pour canaliser l'air :
*i.* court-circuiter et/ou empêcher l'évacuation de l'air par fixation d'une obturation de manchette (11B) au niveau de la conduite de transport (9) dans la zone de l'ouverture de type tamis.

7. Procédé pour le fonctionnement du distributeur (1), le guide d'air (11) étant réalisé sous forme de manchette (11A) et/ou sous forme d'obturateur de manchette (11B), selon la revendication 6, **caractérisé par** au moins l'une des étapes de procédé :
*a.* pour évacuer l'air :
*i.* fixer une manchette (11A) à l'aide d'au moins une tubulure de raccordement (14) évacuant l'air au niveau de la conduite de transport (9) dans la zone de l'ouverture d'évacuation d'air de type tamis,
*ii.* obturer au moins une ouverture d'épandage (16) au niveau d'une tête distributrice (6) du distributeur (1),
*iii.* relier l'au moins une tubulure de raccordement (14) au moyen d'une conduite (15) et/ou d'une conduite d'épandage (10), dont l'ouverture d'épandage (16) associée est obturée au niveau de la tête distributrice (6), à un outil de traitement du sol (4),
*iv.* incorporer l'air sortant de l'ouverture d'évacuation d'air de type tamis dans le sol au niveau de l'outil de traitement du sol (4).
